Europäisches Patentamt

(19) European Patent Office

Office européen des brevets

(11) Publication number: **0 022 617 B2**

(12) **NEW EUROPEAN PATENT SPECIFICATION**

(45) Date of publication of the new patent specification : **25.09.91 Bulletin 91/39**

(51) Int. Cl.$^5$: **C08G 18/48, C08G 18/12**

(21) Application number : **80301861.3**

(22) Date of filing : **04.06.80**

(54) **Polyisocyanate compositions and their use in the preparation of polyurethane foams.**

The file contains technical information submitted after the application was filed and not included in this specification

(30) Priority : **11.07.79 GB 7924105**

(43) Date of publication of application : **21.01.81 Bulletin 81/03**

(45) Publication of the grant of the patent : **15.02.84 Bulletin 84/07**

(45) Mention of the opposition decision : **25.09.91 Bulletin 91/39**

(84) Designated Contracting States : **BE DE FR GB IT NL**

(56) References cited :
DE-A- 2 127 504
DE-A- 2 211 914
DE-A- 2 513 793
DE-A- 2 513 796
DE-A- 2 517 281
DE-A- 2 711 735
DE-A- 2 810 596

(56) References cited :
GB-A- 2 007 690
GB-A- 2 021 605
US-A- 3 012 987
US-A- 3 644 457
US-A- 3 793 241
US-A- 4 137 200
Kunststoff-Handbuch, Band VII
"Polyurethane", Carl Hanser Verlag, 1966, pp. 62-65, 450-453

(73) Proprietor : **IMPERIAL CHEMICAL INDUSTRIES PLC**
**Imperial Chemical House, Millbank**
**London SW1P 3JF (GB)**

(72) Inventor : **Carrol, William Graham**
**9 Sunnymede Vale**
**Holcombe Brook Bury, Lancs (GB)**
Inventor : **Farley, Peter**
**4 Hardy Grove**
**Swinton, Manchester (GB)**

(74) Representative : **Stephenson, Kenneth et al**
**Imperial Chemical Industries PLC Legal Department: Patents PO Box 6 Bessemer Road**
**Welwyn Garden City Herts, AL7 1HD (GB)**

EP 0 022 617 B2

EP 0 022 617 B2

## Description

This invention relates to polyisocyanate compositions prepared by blending prepolymers, made from polyoxyalkylene polyols and an excess of an organic polyisocyanate with a further polyisocyanate and to their use for preparing polyurethane foams, particularly those flexible foams known as "cold cure foams".

DE-A1-2517281 describes a process for the manufacture of flexible polyurethane foams by reacting, in the presence of various agents, an organic polyisocyanate, which may be diphenylmethane diisocyanate, with (a) a polyoxyalkylene polyol having an ethylene oxide content of 0 to 30 % by weight, and (b) 0.1 to 5 % by weight of an auxiliary polyoxyalkylene polyol having an ethylene oxide content of 30 to 95 % by weight. The foams are made by the "one-shot" technique, i.e. by mixing the foam-forming ingredients together in a single operation.

A method of preparing flexible polyurethane foams by reacting an organic polyisocyanate with polyoxyalkylene polyols is also described in GB-A-2021605. In this case a prepolymer is first prepared by reacting a polyoxyethylene polyol with an excess of diphenylmethane diisocyanate and the prepolymer then reacted with the polyoxyalkylene polyol containing oxypropylene and oxyethylene residues. This method is of particular value for preparing cold cure foams but the prepolymer, like the unmodified diphenylmethane diisocyanate, is unstable at low temperatures, i.e. solidification of the liquid material occurs after a time at low temperatures.

The present invention provides a polyisocyanate composition which is particularly valuable for preparing cold cure foams and which is more stable at low temperatures.

According to one aspect of the present invention there is provided a polyisocyanate composition comprising a blend of (a) a prepolymer with a NCO content of up to 29 % by weight, prepared by reacting a polyoxyalkylene diol or triol with an excess of an isomeric mixture of diphenylmethane diisocyanates, mainly consisting of the 4,4' and 2,4' isomers, the isocyanate to hydroxy groups ratio being at least 4:1, said polyoxyalkylene diol or triol having a hydroxyl equivalent weight in the range 1000 to 2000 and containing propylene oxide and ethylene oxide residues, the latter being distributed in a random manner throughout the polyoxyalkylene chain or part thereof and constituting from 50 to 85 % by weight of the total alkylene oxide residues, said polyoxyalkylene diol or triol being obtainable by reacting a mixture of ethylene and propylene oxides containing at least 50 % by weight of ethylene oxide with a compound containing two or three active hydrogen atoms in the molecule, and (b) a crude diphenylmethane diisocyanate containing from 40 to 80 % by weight of diphenylmethane diisocyanates, the remainder being largely polymethylene polyphenyl polyisocyanates of functionality greater than two.

The prepolymer may be prepared using conditions that have been described in the prior art for such preparations. Thus, the polyisocyanate and the polyoxyalkylene diol or triol may be reacted together at normal or elevated temperatures, optionally in the presence of a catalyst, until the reaction is substantially complete. It is generally preferred to form the prepolymer by reacting the polyisocyanate with the polyoxyalkylene diol or triol at a temperature within the range 70-90°C for about 30-60 minutes.

The polyisocyanate is used in an excess amount relative to the polyoxyalkylene diol or triol, that is to say the ratio of isocyanate groups in the polyisocyanate to hydroxyl groups in the diol or triol is greater than 1:1. Preferably, this ratio should be at least 4:1 so that the viscosity of the prepolymer is not excessively high. The prepolymer may have an NCO content of up to 29 % by weight.

The polyisocyanate used in preparing the prepolymer is an isomeric mixture of diphenylmethane diisocyanates mainly consisting of the 4,4' and 2,4' isomers. The so-called crude diphenylmethane diisocyanate containing from 40 to 80 % by weight of diphenylmethane diisocyanates, the remainder being largely polymethylene polyphenyl polyisocyanates of functionality greater than two, may be obtained by the phosgenation of crude diaminodiphenylmethane as has been fully described in the prior art.

Polyoxyalkylene diols or triols suitable for use in preparing the prepolymer may be prepared by methods known in the art for preparing polyoxyalkylene polyols. Thus, diols or triols having ethylene oxide residues distributed in a random manner throughout the polyoxyalkylene chain may be prepared by reacting a mixture of ethylene and propylene oxides containing at least 50 % by weight of ethylene oxide with a compound containing two or three active hydrogen atoms in the molecule for example a dihydric or trihydric alcohol. Examples of polyols in which the ethylene oxide residues are distributed in a random manner throughout part of the polyoxyalkylene chain include polyols made by reacting a polyoxypropylene diol or triol with a mixture of ethylene and propylene oxides, the amount of ethylene oxide being such as to give a product containing at least 50 % by weight of ethylene oxide residues based on the total weight of the propylene oxide and ethylene oxide residues. It is preferred that the polyoxyalkylene diol or triol contains from 65 to 85 % by weight of ethylene oxide residues based on the weight of the total alkylene oxide residues. The hydroxyl equivalent weight of the polyoxyalkylene diol or triol is preferably in the range 1000 to 2000.

In another aspect of the present invention, there is provided a method for the preparation of polyurethane foams which comprises intimately mixing :

2

(a) a polyisocyanate composition comprising a blend of (A) a prepolymer with a NCO content of up to 29 % by weight; prepared by reacting a polyoxyalkylene diol or triol with an excess of an isomeric mixture of diphenylmethane diisocyanates, mainly consisting of the 4,4' and 2,4' isomers, the isocyanate to hydroxy groups ratio being at least 4:1, said polyoxyalkylene diol or triol having a hydroxyl equivalent weight in the range 1000 to 2000 and containing propylene oxide and ethylene oxide residues, the latter being distributed in a random manner throughout the polyoxyalkylene chain or part thereof and constituting from 50 to 85 % by weight of the total alkylene oxide residues, said polyoxyalkylene diol or triol being obtainable by reacting a mixture of ethylene and propylene oxides containing at least 50 % by weight of ethylene oxide with a compound containing two or three active hydrogen atoms in the molecule, and (B) a crude diphenylmethane diisocyanate containing from 40 to 80 % by weight of diphenylmethane diisocyanates, the remainder being largely polymethylene polyphenyl polyisocyanates of functionality greater than two;

(b) a polyoxyalkylene polyol containing oxypropylene and optionally oxyethylene residues;

(c) water, and

(d) a catalyst for foam formation, optionally in the presence of other conventional polyurethane foam ingredients.

The polyisocyanate composition (a) has already been described.

The polyoxyalylene polyol, referred to above as component (b) may be a polyoxypropylene polyolor a poly(oxy-propylene-oxyethylene)polyol or a mixture thereof. Such polyols and methods for their preparation have been fully described in the prior art, many of them being commercially available. The poly(oxypropylene-oxyethylene)polyols includes ethylene oxide-tipped polyoxypropylene polyols and other random or block copolymers obtained by reacting ethylene and propylene oxides with active hydrogen-containing initiators.

The polyoxyalkylene polyol is most suitably a diol or triol or a mixture thereof. Preferably, it has a hydroxyl equivalent weight in the range 700—2000.

The water used a blowing agent in making the foams is used in an appropriate amount to give a foam of the desired density. It is appropriate to use from 1.0 to 5.5%, especially from 1.5 to 4.0%, by weight of water based on the weight of the polyoxyalkylene polyol.

Catalysts which may be used in making the foams have been fully described in the prior art and include tertiary amines and organic metal compounds, particularly tin compounds. Examples of suitable tertiary amines include N,N-dimethylcyclohexylamine, N,N-dimethylbenzylamine, N,N-dimethylethanolamine and 1,4-diazabicyclo[2.2.2]octane. Organic metal compounds which may be used as catalysts include stannous octoate and dibutyltin dilaurate. It is often advantageous to use a mixture of catalysts, for example a mixture of amines or an amine and a tin compound.

Other conventional polyurethane foam ingredients which may be used in addition to the components already mentioned include tolylene diisocyanates which may be blended with the prepolymer in an amount of up to 80% by weight based on the weight of prepolymer. Also the prepolymer may be blended with a different diphenylmethane diisocyanate. For example, a prepolymer made by reacting a polyoxyalkylene diol or triol with a substantially pure diphenylmethane diisocyanate can be blended with a crude diphenylmethane diisocyanate.

Other conventional ingredients which may be mentioned include surfactants, for example siloxane-oxyalkylene copolymers, fillers, fire-retardants, pigments, dyes and additional blowing agents, for example trichlorofluoromethane.

In general, the composition of the foam-forming reaction mixture should be such that the ratio of isocyanate groups to active hydrogen atoms is within the range of 0.7:1 to 1.2:1 and especially within the range of 0.8:1 to 1.1:1.

The components of the foam-forming reaction mixture may be mixed together in any convenient manner, for example by using any of the mixing equipment described in the prior art for the purpose. If desired, some of the mutually inert individual components may be pre-blended so as to reduce the number of component streams requiring to be brought together in the final mixing step. It is often convenient to have a two-stream system whereby one stream comprises the prepolymer and any additional polyisocyanate and the second comprises all the other components of the reaction mixture.

If desired, the density of the foamed product can be modified by overpacking, that is to say foaming the reaction mixture in a closed mould having a volume less than that which would be occupied by the resultant foam if the reaction mixture were allowed to rise freely.

The method of the invention is particularly valuable for preparing foams known as cold cure foams. Such foams frequently exhibit surface defects by retaining indentations made therein for an excessive length of time. The effect of the polyoxyalkylene diol or triol present in the prepolymer is to minimise this defect. The same advantageous result is not obtained when a polyoxypropylene polyol is used to make the prepolymer.

A similar result can be obtained by using a prepolymer made by reacting diphenylmethane diisocyanate with a polyoxethylene polyol, for example a polyethylene glycol but such prepolymers have inferior low temperature stability compared with the prepolymers used in the process of the present invention.

The invention is illustrated but not limited by the following Examples in which all parts and percentages are by weight.

A polyol masterbatch is prepared by mixing 100 parts of an ethylene oxide tipped oxypropylated glycerol having an oxyethylene content of 16% and a molecular weight of 6000, 3.7 parts of water, 1.0 part of a 33% solution of triethylene diamine in dipropylene glycol, 0.1 part of a 70% solution of bis(2-dimethylaminoethyl)ether in dipropylene glycol, 1.0 part of Silicone Oil B4113 and 10 parts of trichlorofluoromethane.

A prepolymer is prepared by reacting 157.6 parts of an isomeric mixture of diphenylmethane diisocyanate containing approximately 83% 4,4', 16,5% 2,4' and a trace of 2,2'-isomer with 100 parts of an oxyethylated/oxyproylated glycerol having an oxyethylene content of 70% (randomly distributed) and a molecular weight of 4000. The reaction is carried out at 80—90°C for 1 hour and the prepolymer has an NCO content of 18.6%. 60 parts of the prepolymer are blended with 40 parts of a crude diphenylmethane diisocyanate containing approximately 50% of diphenylmethane diisocyanate isomers and having an NCO content of 30.7% to give Polyisocyanate Composition 1.

Polyisocyanate Composition 2 is made in an identical manner by replacing the above prepolymer by a prepolymer having an NCO content of 23.4% made by reacting 315.3 parts of the diphenylmethane diisocyanate isomer mixture with 100 parts of polypropylene glycol of molecular weight 2000.

Foams are made by mixing the polyol masterbatch with each of the polyisocyanate compositions according to the following formulations:

|  | A | B |
| --- | --- | --- |
| Polyol masterbatch | 100 | 100 parts |
| Polyisocyanate composition 1 | 61.6 | — parts |
| Polyisocyanate composition 2 | — | 54.8 parts |
| Isocyanate index | 84 | 84 |
| Moulded density (kg/m³) | 45 | 43 |

Foam A has a much softer skin than Foam B and recovers instantaneously from surface indentations whereas Foam B has a slower recovery.

Example 2

A prepolymer is prepared by reacting 208 parts of an isomeric mixture if diphenylmethane diisocyanates containing approximately 79% 4,4', 20% 2,4' and 1% 2,2'-isomer with 50 parts of polypropylene glycol of molecular weight 4000 and 50 parts of the random oxyethylated/oxypropylated glycerol described in Example 1. The reaction is carried out at 80—90°C for 1 hour and the prepolymer has an NCO content of 21.6%. 70 parts of the prepolymer are blended with 30 parts of the crude diphenylmethane diisocyanate described in Example 1 to give Polyisocyanate Composition 3.

Polyisocyanate Composition 4 is made in an identical manner but replacing the above prepolymer by a prepolymer having an NCO content of 20.0% made by reacting 172.5 parts of the diphenylmethane diisocyanate isomer mixture with 100 parts of polypropylene glycol of molecular weight 4000.

Foams are made by mixing the polyol masterbatch described in Example 1 with each of the polyisocyanate compositions according to the following formulations:

|  | C | D |
| --- | --- | --- |
| Polyol masterbatch | 100 | 100 parts |
| Polyisocyanate composition 3 | 59.9 | — parts |
| Polyisocyanate composition 4 | — | 63.2 parts |
| Isocyanate index | 85 | 85 |
| Moulded density (kg/m³) | 42 | 46 |

Foam C has a better cure and a much faster recovery from surface indentations than foam D.

## Claims

1. A polyisocyanate composition comprising a blend of (a) a prepolymer with a NCO content of up to 29% by weight, prepared by reacting a polyoxyalkylene diol or triol with an excess of an isomeric mixture of diphenylmethane diisocyanates, mainly consisting of the 4,4' and 2,4' isomers, the isocyanate to hydroxy groups ratio being at least 4:1, said polyoxyalkylene diol or triol having a hydroxyl equivalent weight in the range 1000 to 2000 and containing propylene oxide and ethylene oxide residues, the latter being distributed in a random manner throughout the polyoxyalkylene chain or part thereof and constituting from 50 to 85 % by weight of the total alkylene oxide residues, said polyoxyalkylene diol or triol being obtainable by reacting a mixture of ethylene and propylene oxides containing at least 50 % by weight of ethylene oxide with a compound containing two or three active hydrogen atoms in the molecule, and (b) a crude diphenylmethane diisocyanate containing from 40 to 80 % by weight of diphenylmethane diisocyanates, the remainder being largely polymethylene polyphenyl polyisocyanates of functionality greater than two.

2. A method for the preparation of cold cure polyurethane foams which comprises intimately mixing :
(a) a polyisocyanate composition according to claim 1;
(b) a polyoxyalkylene polyol containing oxypropylene and optionally oxyethylene residues;
(c) water, and
(d) a catalyst for foam formation, optionally in the presence of other conventional polyurethane foam ingredients.

## Revendications

1. Composition de polyisocyanate comprenant un mélange (a) d'un prépolymère à teneur en NCO s'élevant à 29 % en poids préparé par réaction d'un polyoxyalkylènediol ou triol avec un excès d'un mélange de diisocyanatodiphénylméthanes isomères consistant principalement en les isomères 4,4' et 2,4', le rapport des groupes isocyanato aux groupes hydroxy étant d'au moins 4:1, le polyoxyalkylènediol ou triol ayant un poids équivalent d'hydroxyle de 1000 à 2000 et contenant des résidus d'oxyde de propylène et d'oxyde d'éthylène, ces derniers étant répartis de manière statistique au long de la chaîne polyoxyalkylénique ou d'une partie de celle-ci et constituant 50 % à 85 % du poids de l'ensemble des résidus d'oxydes d'alkylène et le polyoxyalkylènediol ou triol pouvant être obtenu par réaction d'un mélange d'oxydes d'éthylène et de propylène contenant au moins 50 % en poids d'oxyde d'éthylène, avec un composé contenant deux ou trois atomes actifs d'hydrogène dans la molécule, (b) d'un diisocyanatodiphénylméthane brut contenant 40 à 80 % en poids de diisocyanatodiphénylméthanes, le reste étant formé pour beaucoup par des polyméthylène-polyphénylpolyisocyanates d'une fonctionnalité supérieure à deux.

2. Procédé de préparation de mousses de polyuréthanne se polymérisant à froid, qui consiste à mélanger intimement :
(a) une composition de polyisocyanate suivant la revendication 1,
(b) un polyoxyalkylènepolyol contenant des résidus oxypropylène et éventuellement oxyéthylène ;
(c) de l'eau, et
(d) un catalyseur pour la formation de la mousse, éventuellement en présence d'autres constituants classiques pour mousses de polyuréthanne.

## Patentansprüche

1. Polyisocyanatzusammensetzung, enthaltend ein Gemisch aus (a) einem Präpolymer mit einem NCO-Gehalt bis zu 29 Gew.%, das durch Umsetzung eine Polyoxyalkylendiols oder -triols mit einem Überschuß eines isomeren Gemischs von Diphenylmethandiisocyanaten, das hauptsächlich aus den 4,4'- und 2,4'-Isomeren besteht, unter Einhaltung eines Verhältnisses von Isocyanat- zu Hydroxygruppen von mindestens 4:1 hergestellt worden ist, wobei das Polyoxyalkylendiol oder -triol ein Hydroxyläquivalentgewicht im Bereich von 1000 bis 2000 aufweist und Propylenoxid- und Ethylenoxidreste enthält und wobei die letzteren in statistischer Weise über die Polyoxyalkylenkette oder einen Teil davon verteilt sind und 50 bis 85 Gew.% der gesamten Alkylenoxidreste ausmachen und wobei außerdem das Polyoxyalkylendiol oder -triol durch Umsetzung eines Gemischs aus Ethylen- und Propylenoxid, welches mindestens 50 Gew.% Ethylenoxid enthält, mit einer Verbindung, die 2 oder 3 aktive Wasserstoffatome im Molekül enthält, erhalten woden ist, und (b) einem rohen Diphenylmethandiisocyanat, das 4O bis 8O Gew.% Diphenylmethandiisocyanate enthält, wobei der Rest weitgehend aus Polymethylenpolyphenyl-polyisocyanaten einer höheren Funktionalität als 2 besteht.

2. Verfahren zur Herstellung von kalthärtenden Polyurethanschäumen, bei welchem folgende bestandteile innig gemischt werden:

(a) eine Polyisocyanatzusammensetzung nach Anspruch 1

(b) ein Polyoxyalkylenpolyol, das Oxypropylen- und gegebenenfalls Oxyethylenreste enthält,

(c) Wasser und

(d) ein Katalysator für die Schaumbildung, wobei das Mischen gegebenenfalls in Gegenwart weiterer üblicher Polyurethanbestendteile erfolgt.